# EUROPEAN PATENT SPECIFICATION

(11) **EP 1 922 935 B1**
(45) Date of publication and mention of the grant of the patent: **25.07.2012**
(21) Application number: 06023608.0
(22) Date of filing: 14.11.2006
(51) Int. Cl.: A22C 21/00

(54) **Apparatus for taking down poultry from shackles**
Vorrichtung zur Entnahme von Geflügel von Förderhaken
Dispositif de prélèvement de volailles des crochets de transport

(43) Date of publication of application: 21.05.2008
(73) Proprietor: Linco Food Systems A/S, 8380 Trige (DK)
(72) Inventor: Andersen, Claus, 8370 Hadsten (DK)
(74) Representative: Gregersen, Niels Henrik

(56) References cited:
- EP-A1- 0 819 382
- EP-A1- 1 097 644
- WO-A-82/00001
- DE-C1- 3 125 412
- US-A- 3 097 391
- US-A- 5 453 045

## Description

### Field of the Invention

The present invention relates to an apparatus for taking down poultry suspended by the legs in shackles of an overhead conveyor for delivery in specific receiving positions such as receiving receptacles and of the type as describes in the preamble to claim 1.

### Background of the Invention

Known apparatuses of this type being adapted to push the legs of the poultry laterally out from the shackles by means of pushing means arranged to carry out said lateral movement very quickly in order not to be hit by the relatively speedy moved shackles of said overhead conveyor. As a consequence of this working system the capacity of such known apparatuses are not very high, which again means that each of said receiving position or receiving receptacle has to be equipped with more of such known apparatuses present in order to meet the capacity requirement.

WO 82/00001 A1 discloses a bird cutting plant comprising an endless conveyor with equidistantly spaced apart bird suspension means from which the birds are suspended upside down for transport through at least one cutting station. Each suspension mean includes two yokes secured to the conveyor and adapted to receive the birds' lower legs, the connection line of said yokes extending transversely of the direction of movement of the conveyor, and the spacing between said yokes along said connection line being sufficient to make said yokes hold the lower legs of a bird suspended in this manner stretched apart, but at the same time hold the bird freely swingable, in the conveying direction, on the distal enlarged end portion of the lower legs. Said yokes include guide means adapted to guide the cut bird parts out the yokes when subjected to a force acting against the direction of force of the gravity. The cutting stations are provided with cutting means adapted to cut the birds in symmetrically specular dispositions in a plane including the conveying direction, at least said one cutting station being adapted to bipartition the bird before the birds body and legs are cut at any subsequent stations.

DE 31 25 412 C1 discloses an apparatus for presenting fish in a correct position for decapitation in which fish, lying transversely to their longitudinal axes in receiving troughs of a trough conveyor are fed to a decapitating tool. For positioning the fish there is provided a device which comprises a displacing element engageable with the snout of each fish and operable and positionable in dependence on the detected thickness of the fish in the region of its head. A feeler is coupled to a position sensor which emits signals dependent on the fish thickness via a control circuit to control the displacement element via levers, as said element moves in direction of conveyed fish as rod is angled in the conveying direction and then is returned to its rest position.

US 5 453 045 A discloses a system for transferring birds from a weigh line to a cut-up line through an intermediate accumulator, comprising a continuously rotating buffer wheel having a plurality of bird carriers slidably mounted on its periphery and being carried on buffer wheel toward either an inlet gate or a delivery gate. When a bird carrier arrives at either inlet gate or delivery gate, it is stopped by a gate arm or, respectively, and remains stationary with respect to the continuously moving buffer wheel, gate arm opens and a first pressure wheel assembly is activated to carry a bird carrier on the periphery of buffer wheel toward a shackle having bird suspended there, to the inlet area whereupon the bird will be transferred from shackle to bird carrier, and then carried on the buffer wheel toward delivery gate.

### Object of the Invention

On that background it is the purpose of the present invention to provide a new and improved apparatus of the introductory mentioned type for taking down poultry suspended by the legs in shackles of an overhead conveyor.

### Description of the Invention

The apparatus according to the invention is characterized in, that arm member being provided with an arched outer end part, said arm member by means of electrically operated means being adapted to pivot between an inactive position, where said arched outer end part is positioned outside the path of movement of the legs of said poultry - when suspended in said shackles - and an active position, where said arched outer end part is positioned in the path of movement of the legs of said poultry - when suspended in said shackles, so that in said active position said legs of said poultry being forces laterally out from said shackles by a combined pattern of motion and speed profile of said arched outer end portion of said arm member and the force of movement of the shackles of said overhead conveyor.

Hereby is by simple technical provisions obtained a new and improved apparatus for successively taking down poultry being suspended by the legs from shackles of an overhead conveyor.

The new and improved apparatus for taking down poultry suspended by the legs in shackles of an overhead conveyor is mainly suited for forming batches of poultry - such as batches of 10 chickens or broilers with a total weight of 15 kg - as the poultry are weighed and/or quality/type graded before they are placed in the shackles of the overhead conveyor, or alternative they are weighed and/or quality/type graded on a first part of the overhead conveyor.

The working capacity of the apparatus according to the invention is not restricted by the actual working speed of any known laterally pushing out mechanism, because instead the actual working speed of the inventive apparatus is directly effected by the force of movement of the shackles or the force of movement of said overhead conveyor. In other words the working capacity of the apparatus according to the present invention is only dependent on the speed of rotation of said pivotally arm member.

Appropriately, the apparatus according to the invention is such provided, that said electrically operated means being constituted by an electric stepping motor or servomotor comprising a control unit being adapted to determine a pattern of motion and/or speed profile of said arched outer end portion of said arm member.

Preferably, the apparatus according to the invention is furthermore such provided, that said control unit is a adapted for receiving at least one control signal from a central computer unit comprising a number of sensors being adapted for determining the longitudinal position of the legs of said poultry suspended in said shackles of said overhead conveyor, and which are operatively connected with said stepping motor or servomotor.

By the apparatus according to the invention said sensors may be constituted by photoelectric cells placed above and/or along said overhead conveyor. Alternatively, said sensors may be constituted by laser sensors placed above and/or along said overhead conveyor. Or sensors may even be constituted by photoelectric cells and/or laser sensors placed above and/or along said overhead conveyor.

And appropriately, the apparatus according to the invention may be such provided, that said stepping motor or servomotor comprises a pre-programmed control unit being adapted for utilizing of said control signal received from said sensors for determining a pattern of motion and/or a speed profile of said arched outer end portion of said arm member.

And preferably the apparatus according to the invention may be such provided, that said arched end portion of said arm member being bend in a direction pointing backwards/downwards as seen from the centre of rotation of said arm member and in the direction of movement of said overhead conveyor.

Finally, the apparatus according to the invention may furthermore be such provided, that said apparatus is suspended in a mounting arm system in such a manner that the final position of said motor means and said arched outer end portion of said arm member may be adjusted in both longitudinal, lateral and height position in relation to the path of movement of said shackles of said overhead conveyor.

### Description of the Drawing

The invention is described in more details in the following with reference to the accompanying drawing, in which:

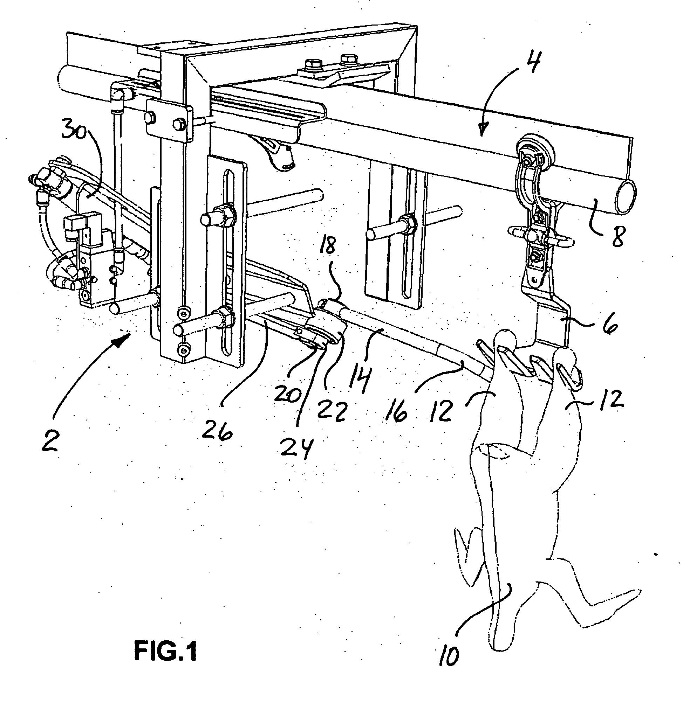

- Fig. 1: shows a perspective view of an embodiment of an apparatus for taking down poultry suspended by the legs in shackles of an overhead conveyor according to the invention as seen with an arched outer end portion of an arm member being swung to a position aligned with the path of movement of the legs of poultry being suspended in shackles of an overhead conveyor,

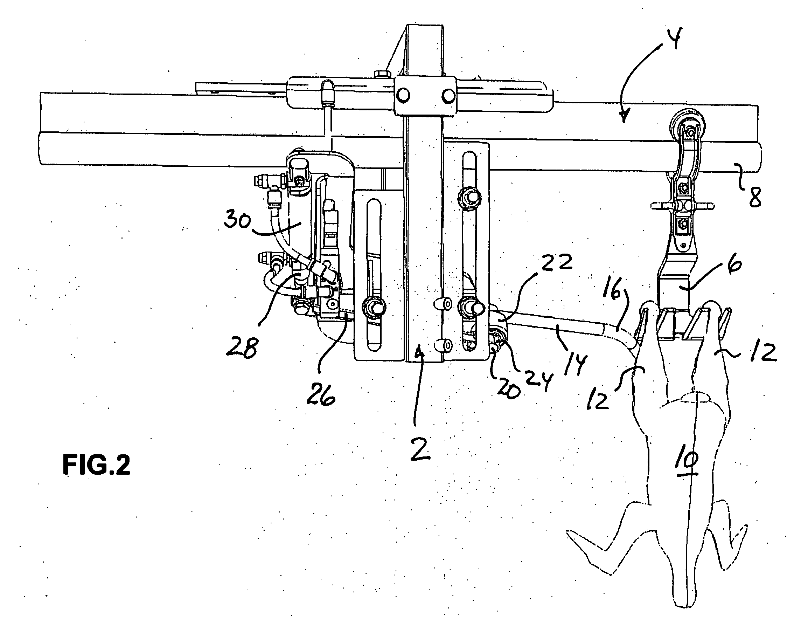

- Fig. 2: shows a perspective view of the embodiment of an apparatus according to the invention and similar to that shown in Fig. 1 - but seen from another position, and

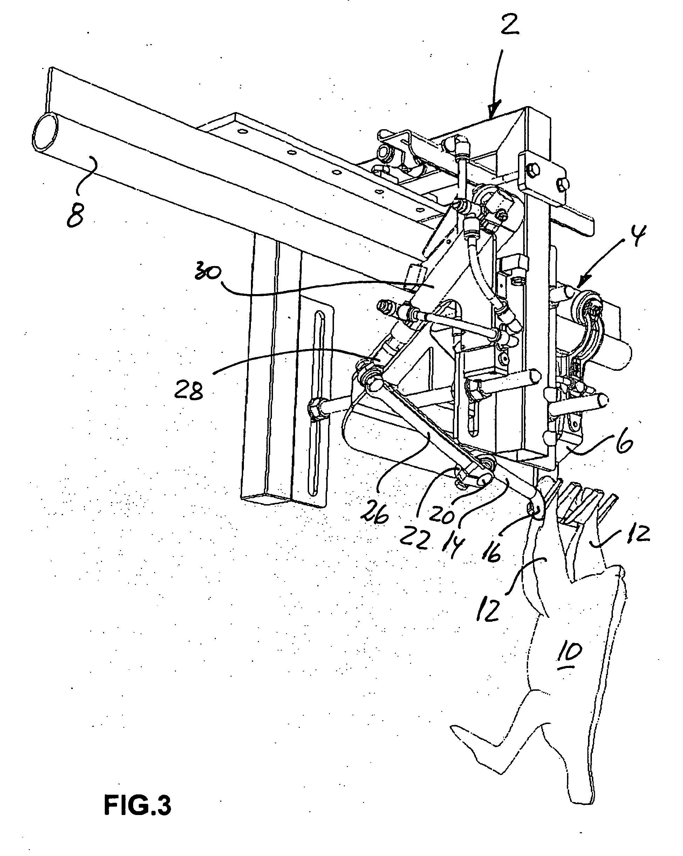

- Fig. 3: shows a perspective view of the embodiment of an apparatus according to the invention and similar to that shown in Fig. 1 - but seen from a still further position and with said arched outer end portion of said arm member being swung to a position in front of the path of movement of the legs of poultry being suspended in shackles of an overhead conveyor.

### Detailed Description of the Invention

Figs. 1-3 show an embodiment of an apparatus 2 adapted to be mounted at a position along an overhead conveyor 4 of the type where a number of interconnected shackles 6 being suspended on a common tubular rail 8, so that the shackles may be travelling along the overhead conveyor 4 with a certain mutual distance determined of the actual size of the poultry in question.

The apparatus 2 is adapted for taking down poultry 10 being suspended by the legs 12 in the shackles 6 when the poultry 10 passes a certain position or possibly a certain receiving receptacle (not shown) below the overhead conveyor 4. For that purpose the apparatus 2 comprises a pivotally arranged arm member 14 with an arched outer end portion 16.

Opposite said arched end portion 16 the arm member being rigidly mounted at an end 18 of a shaft member 20 being pivotally supported in a bearing 22 as an opposite end part 24 of said shaft member 20 cooperates with an activation arm member 26 being operated by means of a piston 28 of a pneumatic cylinder 30 for effecting the turning of said arm member 14 between at least two positions, namely
a first position (Figs. 1 and 2) where said arched outer end portion 16 of said arm member 14 being placed in the path of movement of the legs 12 of the poultry 10 as suspended in said shackles 6 of said overhead conveyor 4, and
a second position (Figs. 3) where said arched outer end portion 16 of said arm member 14 being placed in front of the path of movement of the legs 12 of the poultry 10 as suspended in said shackles 6 of said overhead conveyor 4.

When said arched end portion 16 is placed in said first position, the legs 12 of the poultry 10 are pushed or lifted out from said shackles 6 by the force of movement of said shackles 6 or said overhead conveyor 4. And when said arched end portion 16 is placed in said second position, the legs 12 of the poultry 10 are just passing behind said arm member 14 without interfering with the legs 12 of the poultry 10.

As mentioned above the apparatus 2 is cooperating with a central computer unit which has already being loaded with information about each poultry 10, as they are weighed and/or quality/type graded before they are placed in the shackles 6 of the overhead conveyor 4, or alternative the poultry 10 are weighed and/or quality/type graded on a first part of the overhead conveyor 4.

In other words said apparatus 2 for taking down poultry 10 suspended by the legs 12 in shackles 6 of said overhead conveyor 4 is used for the sorting or the forming of batches of poultry - by way of example batches of 10 chickens or broilers with a total weight of 15 kg.

The central computer unit knows the weight and quality type of each poultry passing the apparatus 2 suspended in said overhead conveyor 4 and before a certain poultry or a certain group of poultry 10 is arriving to the apparatus 2, the arm member 14 is swung to said first position for taking down the next arriving poultry 10 or possibly the next group of poultry 10 matching the batch of poultry in a certain receiving position or a certain receiving receptacle.

When the wanted number of poultry has been taken down, then the arm member 14 is swung back into said second position, where the poultry are free to pass behind the arched end portion 16 of said arm member 14.

However, test have shown that an even better operating apparatus 2 according to the invention may be obtained by substituting said pneumatic cylinder 30 with an electric stepping motor being placed where said shaft member 20 and the bearing member 22 are situated in Figs. 1-3.

In other words the arm member 14 being directly mounted on the outlet shaft of the electric stepping motor, whereby is achieved a considerably more silent working apparatus, because in practice the operation of the pneumatic cylinder 30 may create rather much noise.

In the sorting or batch making zone of a poultry slaughter house there may - by using conventional pneumatically operated systems - otherwise be an enormous noise pressure which forces the workers constantly to make use of noise protecting equipment.

A very important feature of the apparatus according to the invention is that said electrically operated motor means for said arm member 14 may operate below a maximum noise level of 60 dB.

That means that the workers need not to make use noise protecting equipment, which again means that the attention of the workers may be turned against the work and the operation of the machinery whereby the efficiency of the workers are even increased.

By the apparatus according to the invention it may even - by means of said pneumatically operated motor means - be possible to operate below a maximum noise level of 80 dB.

The sorting or batch making capacity of the apparatus 2 according to the invention provided with an electric stepping motor for operating the arm member 14 is at least in the order of about 150 chickens or 15 batches pr. min - corresponding to a total number of chickens in the order of at least 9000 pr. hour.

## Claims

1. An apparatus (2) for taking down poultry (10) suspended by the legs (12) in shackles (6) of an overhead conveyor (4) for delivery in specific receiving positions such as receptacles arranged below said overhead conveyor (4), said apparatus (2) comprises a mechanical member for pushing said legs (12) of said poultry (10) laterally out from said shackles (6), said mechanical member comprises a pivotally arranged arm member (14), **characterized in, that** said arm member (14) being provided with an arched end part (16), said arm member (14) by means of electrically operated motor means (30) being adapted to pivot between an inactive position, where said arched end part (16) is positioned outside the path of movement of said legs (12) of said poultry (10) - when suspended in said shackles (6) - and an active position, where said arched end part (16) is positioned in the path of movement of said legs (12) of said poultry (10) - when suspended in said shackles (6), so that in said active position said legs (12) of said poultry can (10) be forced laterally out from said shackles (6) by a combined pattern of motion and speed profile of said arched end portion (16) of said arm member (14) and the force of movement of said shackles (6) of said overhead conveyor (4).

2. Apparatus (2) according to claim 1, **characterized in, that** said electrically operated motor means is constituted by an electric stepping motor or servomotor (22) comprising a control unit being adapted to determine said pattern of motion and said speed profile of said arched end portion (16) of said arm member (14).

3. An apparatus (2) according to claim 2, **characterized in that** said control unit is adapted for receiving at least one control signal from a central computer unit comprising a number of sensors being adapted for determining the longitudinal position of said legs (12) of said poultry (10) suspended in said shackles (6) of said overhead conveyor (8), and which are operatively connected with said stepping motor or servomotor (22).

4. Apparatus (2) according to claim 3, **characterized in that** said sensors are constituted by photoelectric cells or laser sensors placed above and/or along said overhead conveyor (8).

5. An apparatus (2) according to claims 3-4, **characterized in that** said stepping motor or servomotor (22) comprises a pre-programmed control unit being adapted for utilizing of said control signal received from said sensors for determining a pattern of motion and/or a speed profile of said arched end portion (16) of said arm member (14).

6. An apparatus (2) according to claim 1, **characterized in that** said arched end portion (16) of said arm member (14) being bend in a direction pointing backwards/downwards as seen from the centre of rotation of said arm member (14) and in the direction of movement of said overhead conveyor (8).

7. An apparatus (2) according to claims 1-6, **characterized in that** said apparatus is suspended in a mounting arm system in such a manner that the final position of said motor means (22) and said arched end portion (16) of said arm member (14) may be adjusted in both longitudinal, lateral and height position in relation to the path of movement of said shackles (6) of said overhead conveyor (4).

## Patentansprüche

1. Vorrichtung (2) zum Abnehmen von Geflügel (10), das an den Beinen (12) in Bügeln (6) einer Überkopf-Fördereinrichtung (4) aufgehängt ist, um es an spezifischen Aufnahmepositionen wie etwa Aufnahmebehältern, die unter der Überkopf-Fördereinrichtung (4) angeordnet sind, auszugeben, wobei die Vorrichtung (2) ein mechanisches Element zum Schieben der Beine (12) des Geflügels (10) seitlich aus den Bügeln (6) umfasst, wobei das mechanische Element ein schwenkbar angeordnetes Armelement (14) umfasst, **dadurch gekennzeichnet, dass** das Armelement (14) mit einem gekrümmten Endabschnitt (16) versehen ist, wobei das Armelement (14) mittels elektrisch betriebener Motormittel (30) dafür ausgelegt ist, zwischen einer inaktiven Position, in der der gekrümmte Endabschnitt (16) außerhalb des Wegs der Bewegung der Beine (12) des Geflügels (10) positioniert ist - wenn es in den Bügeln (6) aufgehängt ist -, und einer aktiven Position, in der der gekrümmte Endabschnitt (16) in dem Weg der Bewegung der Beine (12) des Geflügels (10) positioniert ist - wenn es in den Bügeln (6) aufgehängt ist -, zu schwenken, so dass in der aktiven Position die Beine (12) des Geflügels (10) durch eine Kombination aus Bewegungsmuster und Geschwindigkeitsprofil des gekrümmten Endabschnitts (16) des Armelements (14) und durch die Kraft der Bewegung der Bügel (6) der Überkopf-Fördereinrichtung (4) seitlich aus den Bügeln (6) gedrängt werden kann.

2. Vorrichtung (2) nach Anspruch 1, **dadurch gekennzeichnet, dass** die elektrisch betätigten Motormittel durch einen elektrischen Schrittmotor oder Servomotor (22) gebildet sind, der eine Steuereinheit enthält, die dafür ausgelegt ist, das Bewegungsmuster und das Geschwindigkeitsprofil des gekrümmten Endabschnitts (16) des Armelements (14) zu bestimmen.

3. Vorrichtung (2) nach Anspruch 2, **dadurch gekennzeichnet, dass** die Steuereinheit dafür ausgelegt ist, wenigstens ein Steuersignal von einer zentralen Computereinheit zu empfangen, die zahlreiche Sensoren enthält, die dafür ausgelegt sind, die longitudinale Position der Beine (12) des Geflügels (10), die in den Bügeln (6) der Überkopf-Fördereinrichtung (8) aufgehängt sind, zu bestimmen, und die mit dem Schrittmotor oder Servomotor (22) betriebstechnisch verbunden sind.

4. Vorrichtung (2) nach Anspruch 3, **dadurch gekennzeichnet, dass** die Sensoren durch photoelektrische Zellen oder Lasersensoren gebildet sind, die über und/oder längs der Überkopf-Fördereinrichtung (8) angeordnet sind.

5. Vorrichtung (2) nach den Ansprüchen 3-4, **dadurch gekennzeichnet, dass** der Schrittmotor oder Servomotor (22) eine im Voraus programmierte Steuereinheit umfasst, die dafür ausgelegt ist, das von den Sensoren empfangene Steuersignal zu verwenden, um ein Bewegungsmuster und/oder ein Geschwindigkeitsprofil des gekrümmten Endabschnitts (16) des Armelements (14) zu bestimmen.

6. Vorrichtung (2) nach Anspruch 1, **dadurch gekennzeichnet, dass** der gekrümmte Endabschnitt (16) des Armelements (14) in einer Richtung gebogen ist, die bei Betrachtung vom Drehzentrum des Armelements (14) und in Richtung der Bewegung der Überkopf-Fördereinrichtung (6) rückwärts/abwärts zeigt.

7. Vorrichtung (2) nach den Ansprüchen 1-6, **dadurch gekennzeichnet, dass** die Vorrichtung in einem Montagearmsystem in der Weise aufgehängt ist, dass die Endposition der Motormittel (22) und des gekrümmten Endabschnitts (16) des Armelements (14) hinsichtlich der longitudinalen, der lateralen und der Höhenposition in Bezug auf den Weg der Bewegung der Bügel (6) der Überkopf-Fördereinrichtung (4) eingestellt werden kann.

## Revendications

1. Dispositif (2) pour prélever de la volaille (10) suspendue par les pattes (12) dans des crochets de transport (6) d'un convoyeur suspendu (4) pour une livraison dans des positions de réception spécifiques telles que des réceptacles agencés au-dessous dudit convoyeur suspendu (4), ledit dispositif (2) comprend un élément mécanique pour pousser lesdites pattes (12) de ladite volaille (10) latéralement hors desdits crochets de transport (6), ledit élément mécanique comprend un élément de bras (14) agencé de manière pivotante, **caractérisé en ce que** ledit élément de bras (14) est prévu avec une partie d'extrémité arquée (16), ledit élément de bras (14) au moyen de moyens moteurs actionnés électriquement (30) étant adapté pour pivoter entre une position inactive dans laquelle ladite partie d'extrémité arquée (16) est positionnée à l'extérieur de la trajectoire de mouvement desdites pattes (12) de ladite volaille (10) - lorsqu'elle est suspendue dans lesdits crochets de transport (6) - et une position active dans laquelle ladite partie d'extrémité arquée (16) est positionnée dans la trajectoire de mouvement desdites pattes (12) de ladite volaille (10) - lorsqu'elle est suspendue dans lesdits crochets (6), de sorte que dans ladite position active, lesdites pattes (12) de ladite volaille (10) peuvent être forcées latéralement hors desdits crochets de transport (6) par un modèle combiné de mouvement et de profil de vitesse de ladite partie d'extrémité arquée (16) dudit élément de bras (14) et par la force de mouvement desdits crochets de transport (6) dudit convoyeur suspendu (4).

2. Dispositif (2) selon la revendication 1, **caractérisé en ce que** lesdits moyens moteurs actionnés électriquement sont constitués par ou un servomoteur un moteur pas à pas électrique (22) comprenant une unité de commande qui est adaptée pour déterminer ledit modèle de mouvement et ledit profil de vitesse de ladite partie d'extrémité arquée (16) dudit élément de bras (14).

3. Dispositif (2) selon la revendication 2, **caractérisé en ce que** ladite unité de commande est adaptée pour recevoir au moins un signal de commande provenant d'une unité formant ordinateur central comprenant un certain nombre de capteurs qui sont adaptés pour déterminer la position longitudinale desdites pattes (12) de ladite volaille (10) suspendue dans lesdits crochets de transport (6) dudit convoyeur suspendu (8), et qui sont raccordés de manière opérationnelle avec ledit moteur pas à pas ou servomoteur (22).

4. Dispositif (2) selon la revendication 3, **caractérisé en ce que** lesdits capteurs sont constitués par des cellules photoélectriques ou des capteurs laser placés au-dessus et/ou le long dudit convoyeur suspendu (8).

5. Dispositif (2) selon les revendications 3 à 4, **caractérisé en ce que** ledit moteur pas à pas ou servomoteur (22) comprend une unité de commande préprogrammée qui est adaptée pour utiliser ledit signal de commande reçu desdits capteurs pour déterminer un modèle de mouvement et/ou un profil de vitesse de ladite partie d'extrémité arquée (16) dudit élément de bras (14).

6. Dispositif (2) selon la revendication 1, **caractérisé en ce que** ladite partie d'extrémité arquée (16) dudit élément de bras (14) est pliée dans une direction orientée vers l'arrière/vers le bas, comme observé à partir du centre de rotation dudit élément de bras (14) et dans la direction de mouvement dudit convoyeur suspendu (8).

7. Dispositif (2) selon les revendications 1 à 6, **caractérisé en ce que** ledit dispositif est suspendu dans un système de bras de montage de sorte que la position finale desdits moyens moteurs (22) et de ladite partie d'extrémité arquée (16) dudit élément de bras (14) peut être ajustée à la fois dans les positions longitudinale, latérale et en hauteur par rapport à la trajectoire de mouvement desdits crochets de transport (6) dudit convoyeur suspendu (4).
